# FASCICULE DE BREVET EUROPEEN

(11) **EP 3 638 412 B1**
(45) Date de publication et mention de la délivrance du brevet: **07.04.2021**
(21) Numéro de dépôt: 18731774.8
(22) Date de dépôt: 11.06.2018
(51) Int. Cl.: B01J 8/44, B01J 8/18, C10G 11/18

(54) **ELEMENT D'INJECTION DE GAZ POUR UNITE DE CRAQUAGE CATALYTIQUE FLUIDE ET SYSTEME DE DISTRIBUTION DE GAZ EQUIPE DE CET ELEMENT D'INJECTION**
GASINJEKTIONSELEMENT FÜR EINE FLUID-CATALYTIC-CRACKING-EINHEIT UND MIT DIESEM GASINJEKTIONSELEMENT AUSGESTATTETES GASVERTEILUNGSSYSTEM
GAS INJECTION ELEMENT FOR A FLUID CATALYTIC CRACKING UNIT AND GAS DISTRIBUTION SYSTEM EQUIPPED WITH THIS INJECTION ELEMENT

(30) Priorité: 12.06.2017 FR 1755223
(43) Date de publication de la demande: 22.04.2020
(73) Titulaire: Total Raffinage Chimie, 92400 Courbevoie (FR)
(72) Inventeur: SIMON, Hubert, 76620 Le Havre (FR)
(74) Mandataire: Raboin, Jean-Christophe
(86) Numéro de dépôt international: PCT/EP2018/065267
(87) Numéro de publication internationale: WO 2018/228964

(56) Documents cités:
- WO-A1-00/12206
- FR-A1- 3 024 050
- US-A- 5 806 206

## Description

L'invention concerne l'injection de gaz, notamment l'injection d'air, éventuellement enrichi en O₂, ou de vapeur dans une unité de craquage catalytique fluide ou FCC (de l'anglais « Fluid Catalytic Cracking »). L'invention concerne ainsi un élément d'injection de gaz et un système de distribution de gaz équipé d'un ou plusieurs éléments d'injection de gaz.

Dans une unité FCC, les systèmes d'injection d'air (grille d'air, anneau d'air, « pipe grid » -grille- du régénérateur) ou d'injection de vapeur (notamment pour les opérations de strippage) sont généralement munis de buses d'injections permettant de contrôler la répartition du débit de gaz et la vitesse d'éjection. Les injections d'air ou de vapeur se font généralement avec d'importantes vitesses d'éjection qui engendrent des recirculations très rapides de particules dans un environnement plus ou moins dense en catalyseur (fines particules très riches en alumine abrasive). On observe ainsi une érosion par léchage par le catalyseur des faces de ces buses d'injection directement et indirectement exposées au catalyseur circulant dans l'unité et notamment par effet Venturi en sortie de ces buses d'injection. Ce mécanisme d'érosion semble être particulièrement destructeur. Un autre mécanisme d'érosion est également observé. Il arrive en effet que le catalyseur pénètre à l'intérieur des buses, soit par un phénomène dit de « veina contracta », par aspiration du catalyseur par effet venturi du jet de fluide sortant de la buse, soit suite à un pleurage du catalyseur à l'intérieur de la buse, par exemple dans le cas d'un fonctionnement à faible débit. Le catalyseur rentré dans la buse d'injection en est expulsé par le jet de fluide, provoquant une érosion de la buse.

Afin de limiter ces phénomènes d'érosion, plusieurs solutions ont été envisagées. Une solution consiste, par exemple, à réaliser les buses entièrement en céramique. De telles buses sont néanmoins fragiles. Une autre solution consiste à réaliser une buse en métal recouverte d'une couche de matériau dur, par exemple de la stellite®. De telles buses présentent une bonne résistance à l'érosion mais finissent par devoir être remplacées. Une autre solution encore consiste à réaliser des buses en plusieurs pièces : une partie externe de fixation, généralement en acier inoxydable, destinée à être fixée au système d'injection d'air et recevant une partie interne en matériau dur, par exemple de la stellite®. De telles buses doivent cependant être entièrement remplacées en cas de détérioration.

Ainsi, la maintenance de ces systèmes de distribution nécessite souvent le remplacement périodique d'un nombre important de buses à chaque arrêt. En outre, le remplacement des buses est relativement long, les buses devant être dessoudées une à une, la zone de soudure pouvant se trouver sous un revêtement de protection qu'il faut alors enlever au préalable. Aussi, régulièrement, le nombre de buses à remplacer est tel que le remplacement du système de distribution complet est souvent anticipé afin de raccourcir les travaux de maintenance et la durée d'indisponibilité de l'unité. WO00/12206 décrit un élément d'injection de gaz comprenant un élément interne métallique.

Il existe donc un besoin pour limiter et réduire la maintenance des systèmes d'injection de gaz soumis à divers processus érosifs.

A cet effet, l'objet de l'invention concerne un élément d'injection de gaz pour un système de distribution de gaz à l'intérieur d'une enceinte d'une unité de craquage catalytique fluide, ledit élément d'injection comprenant un passage le traversant de part en part s'étendant suivant une direction longitudinale,
caractérisé en ce qu'il comprend :
- un élément interne métallique dont une surface interne définit une partie du passage traversant suivant la direction longitudinale,
- un fourreau creux métallique, recevant une extrémité de l'élément interne et fixé à celui-ci,
- un support creux métallique présentant une surface interne définissant le reste du passage traversant suivant la direction longitudinale, ledit fourreau étant en outre fixé à une extrémité du support.

L'élément interne métallique de l'élément d'injection forme notamment une buse.

L'agencement de l'élément d'injection de l'invention présente de nombreux avantages. Il est notamment possible de réaliser un élément interne métallique (formant buse) spécifique à chaque utilisation sans modifier le support, voire le fourreau. Il est également possible de réaliser facilement et économiquement en grandes quantités l'élément interne métallique et son fourreau. Enfin, l'ensemble élément interne métallique et fourreau peut être rapidement et facilement monté sur le support ou démonté de celui-ci.

Avantageusement, le fourreau peut être en appui contre l'extrémité du support à laquelle il est fixé suivant ladite direction longitudinale. Autrement dit, le fourreau est monté en butée contre le support suivant la direction longitudinale. Ceci peut faciliter son montage sur le support.

En outre, un jeu prédéterminé peut être ménagé entre une extrémité de l'élément interne proximale du support et ce dernier suivant ladite direction longitudinale. Ceci peut limiter l'introduction de contraintes mécaniques supplémentaires et non maitrisées, notamment au niveau d'une zone de soudure entre le fourreau et l'élément interne, lorsque cette soudure est présente.

L'élément d'injection de gaz peut comprendre au moins une des caractéristiques suivantes :
- le fourreau est fretté sur l'élément interne,
- le fourreau est soudé à l'élément interne,
- le fourreau est soudé au support.

Le fourreau peut ainsi être uniquement fretté sur l'élément interne.

Lorsque le fourreau est soudé à l'élément interne, cette soudure peut servir à la solidarisation de ces parties, à l'étanchéité au gaz, ou au deux.

Notamment, le fourreau peut être à la fois fretté sur l'élément interne et soudé à ce dernier, pour un meilleur maintien de l'élément interne et/ou une meilleure étanchéité.

Selon les applications, le support, le fourreau et l'élément interne peuvent être réalisés avec des matériaux identiques ou similaires, chacun étant de préférence réalisé d'une pièce. Toutefois, lorsque l'une des parties de l'élément d'injection est susceptible d'être soumise à des conditions plus sévères, il peut être préférable de prévoir des matériaux différents pour au moins une partie des éléments ou pour tous les éléments.

Avantageusement, le support et le fourreau peuvent être constitués du même matériau métallique. Ceci peut faciliter leur fixation par soudure et ne pas complexifier les opérations de remplacement « in situ » en maintenance. Ce matériau métallique peut notamment être choisi parmi les alliages à base fer, notamment les aciers inoxydables résistants à haute température.

Le matériau constituant l'élément interne peut avantageusement être différent du matériau constituant le support et/ou le fourreau. Ce matériau métallique peut notamment être choisi parmi les alliages à base cobalt, notamment les alliages résistants à haute température.

La réalisation en plusieurs parties de l'élément d'injection de gaz permet de modifier chaque partie indépendamment les unes des autres, pourvu que leur assemblage soit possible, réduisant ainsi les coûts de fabrication et les coûts de maintenance lors de modifications mineures.

Ainsi, une extrémité du support opposée à l'élément interne peut présenter une ouverture dont la section transversale a une surface inférieure ou égale à la surface de la section transversale de la partie du passage définie par le support. En particulier, les dimensions de cette ouverture peuvent être choisies en fonction des dimensions de l'extrémité du passage située du côté de l'élément interne. Il est ainsi possible de choisir les dimensions de l'ouverture en fonction des propriétés hydrodynamiques recherchées pour l'élément d'injection de gaz. Une maitrise des effets de jet pourra également être recherchée. Cette configuration permet ainsi l'introduction de formes géométriques complexes (qui peuvent être obtenues simplement par fonderie de précision ou moulage à la cire perdue) et spécifiquement conçues pour combattre les effets d'érosion (actions sur les formes, vitesses et effets de jets à l'éjection des buses). Les résultats théoriques peuvent notamment être facilement vérifiés par introduction de quelques buses tests comparatives dans le système d'injection.

L'extrémité du support fixée au fourreau peut former une collerette faisant saillie du support suivant une direction transversale à la direction longitudinale. Ceci peut faciliter le montage de l'élément d'injection sur le système de distribution de gaz auquel il est destiné.

Notamment, la collerette peut définir un logement recevant le fourreau sur une partie de sa longueur suivant la direction longitudinale, ce qui peut faciliter le montage du fourreau sur le support. De préférence, le logement présente une forme complémentaire du fourreau. On notera que l'extrémité du support fixée au fourreau peut définir un logement tel que décrit précédemment, même en l'absence de collerette.

En variante ou en combinaison, la dimension de la collerette, suivant la direction longitudinale, peut être prédéterminée. Cette hauteur peut, par exemple, correspondre à la hauteur d'un revêtement de protection destiné à recouvrir une face d'un système de distribution de gaz recevant l'élément d'injection. Ainsi, la fixation et la désolidarisation du fourreau et de l'élément interne, peuvent être réalisées sans avoir à ôter le revêtement.

En général, il peut être préférable que la section transversale du passage traversant ne varie pas brusquement entre le support et l'élément interne. Une évolution progressive pourra ainsi éventuellement être recherchée.

Dans un mode de réalisation, l'élément d'injection peut comporter un passage traversant de section constante sur toute sa longueur suivant la direction longitudinale.

On peut néanmoins prévoir d'autres formes de passage traversant.

Ainsi, le passage traversant de l'élément d'injection peut comprendre, une partie divergente s'évasant en direction de l'extrémité de l'élément interne distante du support suivant la direction longitudinale.

Le reste du passage traversant peut alors présenter une section constante de forme et de surface identiques à la forme et à la surface de la section transversale de plus petite surface de la partie divergente.

Avantageusement, la partie divergente peut correspondre à la partie du passage traversant définie par l'élément interne, ce qui peut permettre de faciliter sa réalisation.

En variante, le passage traversant peut être divergent sur toute sa longueur.

Il est également possible de réaliser des éléments internes présentant des formes particulières du côté de leur extrémité opposée au support.

Ainsi, un bord de l'élément interne opposé au support peut présenter une section transversale dont le contour comprend au moins trois segments choisis parmi un segment rectiligne et un segment courbe. Ce bord peut notamment définir un rebord faisant saillie transversalement de la surface externe de l'élément interne.

Afin de faciliter la fabrication, le fourreau peut être un corps de révolution, notamment un cylindre, présentant un axe de révolution confondu ou parallèle à un axe longitudinal du passage traversant, une partie au moins d'une surface externe de l'élément interne fixée au fourreau étant alors de forme complémentaire au fourreau. L'élément interne peut également être un corps de révolution ou non. Il peut notamment présenter une surface externe de révolution et une surface interne qui n'est pas une surface de révolution.

Avantageusement, le support peut également être un corps de révolution, notamment présentant une ou plusieurs parties cylindriques.

L'invention concerne également un système de distribution de gaz à l'intérieur d'une enceinte d'une unité de craquage catalytique fluide, ledit système de distribution comprenant au moins une paroi support percée d'au moins un orifice et définissant au moins une partie d'une cavité, la paroi support ayant une première face destinée à être en contact avec un gaz contenu dans cette cavité, et une deuxième face, opposée à la première face.

A titre d'exemple, cette paroi support peut être une grille, un plateau percé ou définir un tube, notamment un tube courbé et fermé sur lui-même à la manière d'un tore ou encore définir plusieurs tubes s'entrecroisant (« pipe grid » ou râteau d'air).

Selon l'invention, le système de distribution comprend au moins un élément d'injection tel que décrit précédemment, l'élément d'injection étant solidarisé à la paroi support, au niveau de l'orifice, de sorte que du gaz issu de la cavité puisse circuler au travers de la paroi support vers la deuxième face de celle-ci via le passage de l'élément interne et du support.

Avantageusement, le support peut être inséré dans l'orifice et solidarisé à la paroi support, l'élément interne faisant saillie de la deuxième face de ladite paroi support.

En variante ou en combinaison, le support, lorsqu'il présente une collerette, peut être positionné de sorte que la collerette soit située du côté de la deuxième face de ladite paroi support.

A noter que les dimensions de la collerette peuvent être choisies de manière à affleurer un revêtement de protection situé du côté de la deuxième face, ce revêtement de protection étant de même hauteur que la collerette suivant une direction perpendiculaire à la paroi de support.

L'invention est maintenant décrite en référence aux dessins annexés, non limitatifs, dans lesquels :
- la figure 1 illustre une représentation schématique en coupe d'une enceinte comprenant un système de distribution de gaz selon un mode de réalisation ;
- la figure 2 illustre une représentation schématique partielle en coupe longitudinale d'un élément d'injection selon un mode de réalisation ;
- les figures 2a, 2b illustrent, en coupe longitudinale, des modes de réalisation différents de la jonction entre le support et l'élément interne de l'élément d'injection de la figure 2 ;
- la figure 3 illustre une représentation schématique en coupe longitudinale d'un élément d'injection selon un autre mode de réalisation ;
- les figures 4a-4e représentent partiellement, en coupe longitudinale, des variantes du bord de l'élément interne opposé au support ;
- la figure 5 représente une vue en coupe transversale d'un élément interne selon un mode de réalisation particulier ;
- la figures 6 illustre partiellement une représentation schématique en coupe d'une enceinte comprenant un système de distribution de gaz selon un autre mode de réalisation ;
- la figure 7 est une vue en coupe transversale de l'enceinte représentée figure 6 ;
- la figure 8 est une vue en coupe selon la ligne A-A de la figure 7;
- la figures 9 illustre partiellement une représentation schématique en coupe d'une enceinte comprenant un système de distribution de gaz selon un autre mode de réalisation ;
- la figure 10 est une vue en coupe transversale de l'enceinte représentée figure 9 ;
- la figure 11 est une vue en coupe selon la ligne A-A de la figure 10.

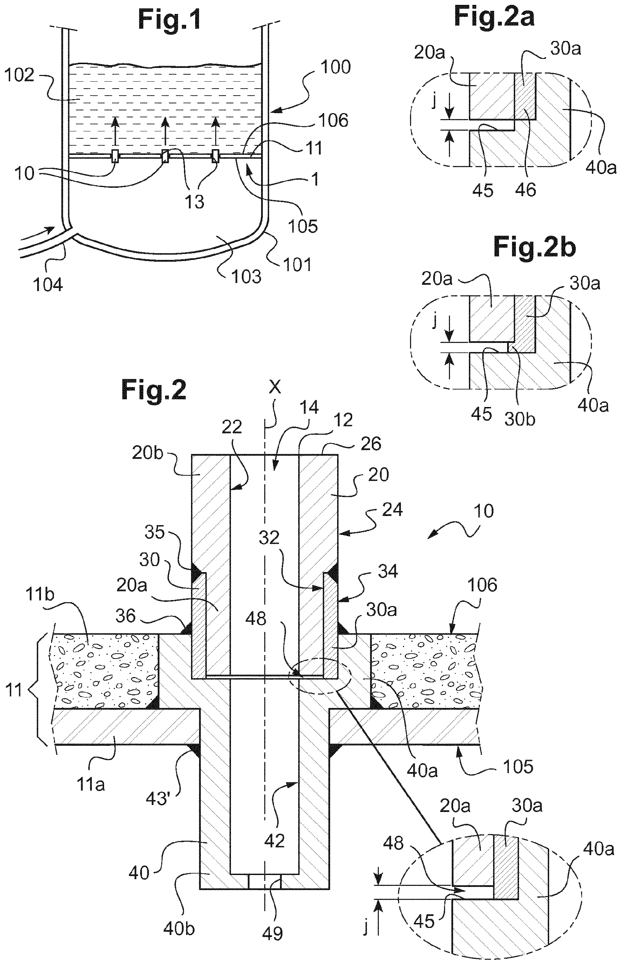

La figure 1 représente partiellement une enceinte 100 faisant partie d'une unité de craquage catalytique fluide FCC non représentée dans son intégralité. L'enceinte représentée est ici une enceinte d'un régénérateur, dans lequel s'effectue la combustion de coke déposé sur du catalyseur issu d'un réacteur de l'unité FCC (non représenté).

Le catalyseur dans l'enceinte 100 forme un lit fluidisé 102.

Un système de distribution 1 permet d'injecter de l'air dans ce lit catalytique fluidisé 102, et donc de l'oxygène nécessaire à la combustion du coke.

Ce système de distribution 1 comprend une paroi support, ici un plateau perforé 11, occupant la totalité d'une section de l'enceinte 100, et supportant le lit fluidisé 102. Ce plateau définit ainsi avec les parois de fond de l'enceinte une cavité d'air 103. Un conduit 104 débouchant sur cette cavité 103 permet de fournir de l'air sous pression.

Le plateau comprend ainsi une première face 105 en contact avec l'air de la cavité 103 et une deuxième face 106 en contact avec le lit de catalyseur fluidisé 102.

Le plateau perforé 11 est ici une plaque 11a, sensiblement plane, notamment en acier. Il peut présenter un revêtement de protection 11b, par exemple réfractaire, en matériau composite (représenté figure 2) du côté de la deuxième face 106. Ce revêtement réfractaire est par exemple obtenu en faisant couler du béton sur un maillage en acier non représenté, par exemple à forme de nid d'abeille comportant une pluralité d'alvéoles hexagonales solidaires les unes des autres par leurs côtés (« hex mesh » en anglais), ou autre.

Sur chaque orifice 13 du plateau 11 est monté un élément d'injection de gaz 10, ici une buse d'injection d'air.

Un mode de réalisation de cet élément d'injection 10 est décrit en référence à la figure 2. Il comprend un passage 14 le traversant de part en part suivant une direction longitudinale X. Dans cet exemple, la direction longitudinale X est également un axe de symétrie du passage 14 et aussi de l'élément d'injection 10. L'élément d'injection 10 est solidarisé à la paroi support 11 de sorte que du gaz issu de la cavité 103 puisse circuler au travers de la paroi support 11 vers la deuxième face 106 de celle-ci via le passage traversant 14.

Cet élément d'injection 10 comprend :
- un élément interne 20 métallique dont une surface interne 22 définit une partie du passage traversant 14 suivant la direction longitudinale,
- un fourreau creux 30 métallique, recevant une extrémité 20a de l'élément interne 20 et fixé à celui-ci,
- un support creux 40 métallique présentant une surface interne 42 définissant le reste du passage traversant 14 suivant la direction longitudinale X, le fourreau 30 étant en outre fixé à une extrémité 40a du support 40.

Avantageusement, l'élément d'injection 10 ne comprend pas d'autre élément, comme dans le présent exemple.

Dans l'exemple représenté, le fourreau 30 est fretté sur l'élément interne 20. En outre, le fourreau 30 est d'une part soudé à l'élément interne 20 par une soudure 35 et d'autre part soudé au support 40 par une soudure 36.

Ainsi, dans l'exemple, l'élément interne 20 comprend une surface interne 22, laquelle définit le passage traversant 14 sur une partie de sa longueur, et une surface externe 24. Le fourreau 30 comprend une surface interne 32 et une surface externe 34.

La surface interne 32 du fourreau 30 et la surface externe 24 de l'élément interne 20 présentent, au niveau des extrémités 20a, 30a à solidariser, des formes et des dimensions autorisant leur solidarisation, notamment par frettage. Dans cet exemple, ces surfaces sont des surfaces de forme complémentaire. Il s'agit notamment de surfaces de révolution, ici cylindriques, présentant un axe de révolution confondu ou parallèle, ici confondu, avec l'axe X.

Dans cet exemple, on notera que l'élément interne 20 comprend des parties cylindriques de dimensions différentes, le fourreau 30 est ici un simple manchon cylindrique. Ces pièces peuvent ainsi être aisément fabriquées. L'invention n'est pas limitée à une forme particulière du fourreau et de l'élément interne pourvu que ces pièces puissent être fixées au moins par soudure ou par frettage, ou au moyen des deux techniques. On comprend notamment que la réalisation de ces pièces est plus facile lorsqu'il s'agit de corps de révolution.

On notera également que le fourreau 30 entoure l'élément interne 20 sur une partie de sa longueur seulement. Ceci peut limiter une érosion du fourreau 30, cette érosion étant habituellement majoritairement observée au niveau des extrémités des éléments d'injection, autrement dit, au niveau de l'extrémité libre de l'élément interne 20.

Le fait d'avoir le fourreau 30 sur une longueur limitée de l'élément interne 20 peut permettre d'avoir uniquement l'élément 20 exposé à l'érosion. Son matériau peut alors être choisi pour résister à l'érosion.

Le fourreau 30 fait la jonction entre le matériau résistant à l'érosion (l'élément 20) et le support métallique 40.

On notera que la solidarisation entre les pièces 20 et 30 peut s'avérer délicate : elle peut être faite en usine lors de la fabrication de l'élément d'injection. Ainsi lors des périodes de travaux, le remplacement des éléments d'injection se fait en retirant l'ensemble 30+20 en retirant la soudure 36 puis en remettant un nouvel ensemble 30+20 en ressoudant. Ce sont des travaux faciles et rapides.

L'invention n'est toutefois pas limitée par une longueur et une forme particulière du fourreau 30 et de l'élément interne 20, pourvu qu'ils puissent être solidarisés l'un à l'autre. Notamment, le fourreau peut être de même longueur que l'élément interne. Toutefois, de préférence, le fourreau peut présenter une longueur plus faible, suffisante pour permettre son insertion dans le logement du support prévu à cet effet et sa soudure au support 40. En outre, il est préférable que la soudure 36 ne soit pas trop proche de la soudure 35, lorsque celle-ci est présente.

Avantageusement, tel que représenté, la surface externe 24 et la surface externe 34 peuvent être dans le prolongement l'une de l'autre après solidarisation du fourreau 30 à l'élément interne 20 (voir figure 2). Ceci peut permettre de limiter l'usure de la surface externe de l'ensemble « élément interne + fourreau ». En outre, une telle disposition est bien adaptée à la réalisation de la soudure 35. On peut cependant prévoir un espace entre les deux surfaces externes qui est rempli par la soudure 35 solidarisant les deux pièces.

Le matériau constituant le fourreau 30 peut être un alliage à base fer, notamment un acier inoxydable. Le matériau constituant l'élément interne peut être en alliage à base cobalt, par exemple en stellite®. Le support 40 peut également être en alliage à base fer, notamment en acier inoxydable.

De préférence, chaque partie, à savoir le fourreau 30, le support 40 et l'élément interne 20, est réalisée d'une pièce indépendamment des autres.

On notera que dans l'exemple représenté, le fourreau 30, plus précisément son extrémité 30a, est en appui contre une surface de l'extrémité 40a du support 40 à laquelle il est fixé, suivant la direction longitudinale X (voir la zone agrandie de la fig. 2). En outre, un jeu prédéterminé j est ménagé entre l'extrémité 20a de l'élément interne 20 proximale du support 40 et ce dernier suivant la direction longitudinale X.

Tel que visible sur l'agrandissement de la figure 2, ce jeu j peut être obtenu en utilisant un fourreau 30 dont l'extrémité 30a fait saillie de l'élément interne 20 en direction du support 40. L'extrémité 30a est alors en appui contre une surface 45 de l'extrémité 40a du support 40.

En variante, ce jeu j peut être obtenu par une forme adaptée du support 40, une surface 45 de celui-ci s'étendant par exemple perpendiculairement à la direction longitudinale X et présentant un épaulement 46 en appui contre l'extrémité 30a du fourreau (voir figure 2a). Cette dernière n'est alors pas en saillie de l'élément interne 20 suivant la direction longitudinale X.

Ou encore, l'extrémité 30a du fourreau peut présenter un rebord 30b s'étendant entre l'élément interne 20 (l'extrémité 20a de celui-ci) et le support 40 (la surface 45 de celui-ci) (voir figure 2b).

On pourrait également envisager que ce jeu soit obtenu par l'insertion d'une pièce distincte (non représentée) entre le support 40 et le fourreau 30, cette pièce distincte pouvant éventuellement s'étendre entre une partie de l'élément interne proche du fourreau et le support.

Le support 40 représenté sur la figure 2 comporte une extrémité 40a en forme de collerette faisant saillie du support 40, notamment de sa surface externe 44, suivant une direction transversale à la direction longitudinale, ici suivant une direction perpendiculaire à cette dernière. Dans la présente description, la référence 40a désigne indifféremment la collerette et l'extrémité du support 40 fixée au fourreau.

Dans cet exemple, le support 40 est également un corps de révolution. Il est ici formé de deux parties cylindriques de diamètres différents.

Cette extrémité 40a en forme de collerette définit en outre un logement 48 recevant le fourreau 30 sur une partie de sa longueur suivant la direction longitudinale. Ce logement 48 reçoit ici l'extrémité 30a du fourreau. On notera que le logement 48 présente une forme complémentaire de l'extrémité 30a qu'il doit recevoir.

On comprend ainsi que la surface 45 précédemment mentionnée forme le fond du logement 48, lequel peut ainsi présenter des zones de profondeurs différentes afin de ménager le jeu j, tel que décrit en référence à la figure 2a.

La dimension suivant la direction longitudinale X de l'extrémité 40a en forme de collerette correspond ici à la hauteur du revêtement réfractaire 11b recouvrant la plaque 11a en acier. Ainsi, lorsque l'élément d'injection 10 est inséré dans un orifice 13, sa collerette 40a vient en appui contre la plaque 11a, du côté de la deuxième face 106 du système d'injection de gaz. Le support 40 est alors soudé à la plaque 11a par une soudure 43. Le revêtement de protection 11b peut alors être appliqué sur la plaque 1 la jusqu'au bord de la collerette 40a (voir figure 2). Il est ainsi possible de souder le fourreau 30 au support 40 (respectivement dessouder), malgré la présence du revêtement de protection, permettant ainsi le montage/démontage de l'ensemble fourreau 30 + élément interne 20 pour les opérations de maintenance « in situ » en laissant en place le support 40.

En variante ou en combinaison, le support 40 peut être soudé à la plaque 11a par une soudure 43' située du côté de la face 105 de la paroi support 11.

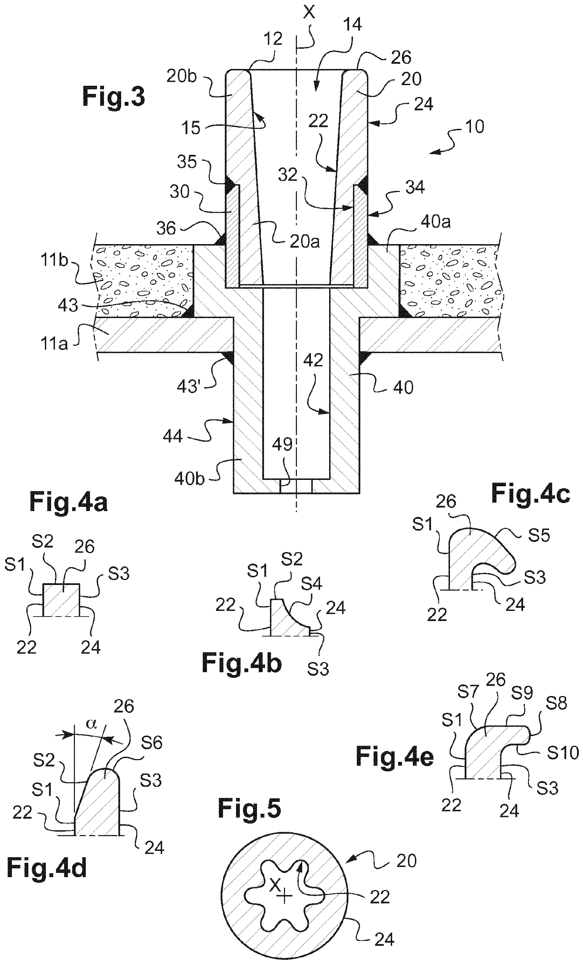

Dans l'exemple représenté sur la figure 2, l'élément d'injection 10 présente un passage traversant 14 de section transversale constante sur toute la longueur de l'élément d'injection (suivant la direction X). L'invention n'est toutefois pas limitée à cette forme particulière, le passage traversant pouvant présenter une partie divergente, tel qu'il est décrit plus bas en référence à la figure 3.

Dans l'exemple de la figure 2, l'ouverture de sortie 12 de l'élément d'injection 10, située au niveau de l'extrémité 20b de l'élément interne (extrémité distale du support 40) présente ainsi une section transversale identique à la section du passage traversant 14.

On notera en outre que l'extrémité 40b du support 40, opposée à l'élément interne 20, présente une ouverture 49 dont la section transversale a une surface inférieure ou égale (ici inférieure) à la surface de la section transversale du passage 14 défini par le support 40 et l'élément interne 20. A titre d'exemple, pour des sections circulaires, le diamètre de l'ouverture 49 peut représenter la moitié du diamètre du passage 14 (lequel correspond au diamètre de l'ouverture de la sortie 12 de l'élément d'injection 10 à l'opposé de l'ouverture 49 suivant la direction longitudinale X).

Le mode de réalisation représenté sur la figure 3 est maintenant décrit. Ce mode de réalisation ne diffère de celui représenté sur la figure 2 que par la forme du passage traversant 14 et de l'extrémité 20b de l'élément interne 20. Les éléments similaires sont ainsi désignés par les mêmes références.

Dans ce mode de réalisation, la partie 15 du passage traversant 14 définie par l'élément interne 20 est divergente depuis l'extrémité 20a de l'élément interne 20. Dans cet exemple, la surface interne 22 de l'élément interne 20 présente ainsi une forme tronconique dont la plus petite dimension est située du côté du support 40. On notera que les sections du passage traversant 14 situées au niveau des extrémités 20a et 40a respectivement sont identiques afin d'assurer une continuité de la section transversale du passage 14 suivant la direction longitudinale.

Le mode de réalisation de la figure 3 présente l'intérêt de réduire la vitesse du gaz en sortie de la buse d'injection. L'effet Venturi qui aspire du catalyseur et cause l'érosion de la surface 26 peut alors être réduit.

On comprend ainsi qu'il est possible de modifier une partie du passage interne sans avoir à modifier l'ensemble de l'élément d'injection.

On peut également modifier aisément la forme de l'ouverture de sortie 12 de l'élément d'injection 10, à savoir le bord libre 26 de l'extrémité 20b de l'élément interne 20.

Les figures 4a à 4e sont des vues en coupe longitudinale du bord libre 26 d'un élément d'injection selon l'invention suivant différents modes de réalisation.

La figure 4a représente ainsi un bord 26 dont la section longitudinale présente un contour formé de segments rectilignes S1, S2, S3, notamment perpendiculaires les uns aux autres, comme dans le mode de réalisation représenté figure 2. Les segments S1 et S3 sont ainsi dans le prolongement respectivement des surfaces interne 22 et externe 24.

La figure 4b représente un bord 26 dont la section présente un contour comprenant trois segments rectilignes S1, S2, S3, dont deux segments rectilignes adjacents S1, S2, notamment perpendiculaires, et un segment courbe S4, de forme concave, dont la concavité est ici dirigée vers l'extérieur de l'élément d'injection 10 et qui relie deux segments rectilignes S2 et S3. Les segments S1 et S3 sont dans le prolongement respectivement des surfaces interne 22 et externe 24. Dans une variante non représentée, le segment S2 pourrait être supprimé. En outre, avec ou sans le segment S2, le segment courbe S4 pourrait être convexe, de convexité dirigée vers l'extérieur.

La figure 4c représente un bord 26 dont la section présente un contour comprenant deux segments rectilignes S1 et S3, dans le prolongement respectivement des surfaces interne 22 et externe 24, reliés par un segment courbe S5, présentant des parties convexes et une partie concave, ce segment courbe S5 définissant un rebord de forme générale arrondie faisant saillie de la surface externe 24 suivant une direction sensiblement transversale. Ce rebord présente une forme similaire à un crochet.

La figure 4d représente un bord 26 dont la section présente un contour comprenant deux segments rectilignes S1 et S3, dans le prolongement respectivement des surfaces interne 22 et externe 24, un autre segment rectiligne S2 adjacent au segment S1 et formant un angle α avec celui-ci et un segment courbe S6 reliant les segments rectilignes S2 et S3. Ce segment courbe S6 présente une convexité dirigée vers l'extérieur de l'élément d'injection.

Enfin, la figure 4e représente un bord 26 dont la section présente un contour comprenant deux segments rectilignes S1 et S3, dans le prolongement respectivement des surfaces interne 22 et externe 24, reliés par des segments courbes S7, S8 et des segments rectilignes S9, S10 en alternance. Les segments courbes S7, S8 sont convexes de convexité dirigée vers l'extérieur de l'élément d'injection. Le bord 26 présente une forme générale de rebord arrondi faisant saillie de la surface externe 24 suivant une direction sensiblement transversale. Dans une variante non représentée, les segments S7 et S8 pourraient être rectilignes.

On comprend ainsi qu'il est possible de réaliser des bords 26 de formes diverses en fonction des besoins.

Dans l'exemple décrit en référence à la figure 3, le support 40 est identique à celui décrit en référence à la figure 2, de même que le fourreau 30. Il est ainsi possible de modifier l'une des parties de l'élément d'injection 10 sans avoir à modifier les autres parties. En outre, le support 40 peut rester en position lors d'une maintenance, seuls le fourreau et l'élément interne étant remplacés. Lorsqu'elle est présente, la collerette 40a du support permet d'éviter d'avoir à ôter un revêtement présent autour du support.

Dans les exemples décrits en références aux figures, la surface interne 22 de l'élément interne 20 est soit tronconique, soit conique. L'invention n'est pas limitée à ces formes. On peut envisager une surface interne 22 dentelée, tel que représenté en coupe transversale sur la figure 5, les dentelures pouvant être arrondies (comme sur la figure 5) ou anguleuses. Ces dentelures peuvent s'étendre parallèlement à l'axe X ou suivre des lignes hélicoïdales. La surface externe 20 de l'élément interne 20 reste quant à elle uniforme. Une telle surface interne dentelée peut alors être prévue pour le support 40 ou bien la profondeur des dentelures peut diminuer depuis la sortie 12 jusque l'extrémité 20a, jusqu'à être nulle (absence de dentelures) au niveau de cette extrémité 20a.

On notera enfin que les différents modes de réalisation décrits en référence aux figures peuvent être combinés.

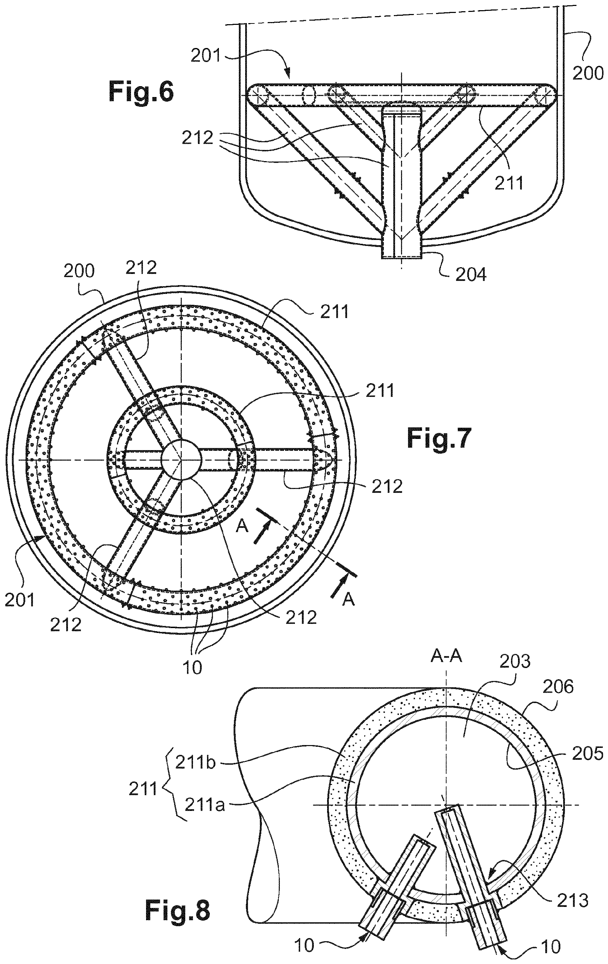

Les figures 6 et 7 représentent un système de distribution 201 comprenant deux parois support 211. Chaque paroi support 211 est perforée et de forme tubulaire. Autrement dit, chaque paroi support 211 est un tube creux percé définissant un volume interne formant une cavité d'air 203 (fig. 8) au sens de l'invention. En outre, chaque paroi support 211 en forme de tube creux est courbée et fermée sur elle-même à la manière d'un tore. Ces parois support 211 sont en communication de fluide via des tubes creux d'alimentation 212. Le système de distribution 201 est situé en bas de l'enceinte 200, un conduit 204 en communication de fluide avec les tubes creux d'alimentation 212 et les cavités d'air 203 fournissant l'air sous pression.

Le système de distribution 201 est communément appelé « à anneaux », du fait de la présence de deux tubes creux 211 en forme d'anneau. L'invention n'est toutefois pas limitée à cette forme particulière, le système de distribution 201 pouvant ne comprendre qu'un seul anneau de distribution, ou plus de deux.

Chaque paroi support 211 comprend une première face 205 en contact avec l'air de la cavité 203 et une deuxième face 206 en contact avec le fluide contenu dans l'enceinte 201.

Chaque paroi de support 211 est ici un tube 211a, notamment en acier. Elle peut présenter un revêtement de protection 211b, par exemple réfractaire, en matériau composite (représenté figure 8) du côté de la deuxième face 206. Ce revêtement réfractaire est du même type que celui précédemment décrit.

Sur chaque orifice 213 d'une paroi support 211 est monté un élément d'injection de gaz 10, ici une buse d'injection d'air du type de celle décrite précédemment en référence aux figures 2-5. On notera que des buses 10 de différentes dimensions peuvent être prévues.

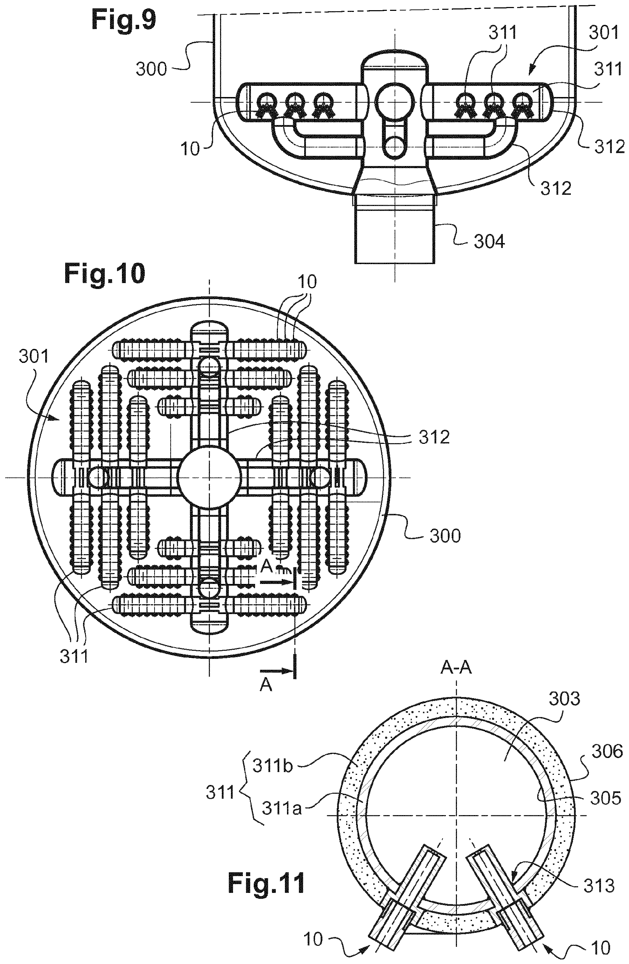

Les figures 9 et 10 représentent un système de distribution 301 comprenant une pluralité de parois support 311. Chaque paroi support 311 est perforée et de forme tubulaire. Autrement dit, chaque paroi support 311 est un tube creux percé définissant un volume interne formant une cavité d'air 303 au sens de l'invention. Les parois support 311 s'entrecroisent à la manière d'un râteau (fig.10). Ces parois support 311 sont en communication de fluide via des tubes creux d'alimentation 312. Le système de distribution 301 est situé en bas de l'enceinte 300, un conduit 304 en communication de fluide avec les tubes creux d'alimentation 312 et les cavités d'air 303 fournissant l'air sous pression.

Le système de distribution 301 est communément appelé « pipe grid » ou râteau d'air, du fait de l'arrangement des tubes creux 311 suivant une grille s'étendant dans un même plan sensiblement horizontal (fig.9 et 10).

Chaque paroi de support 311 comprend une première face 305 en contact avec l'air de la cavité 303 et une deuxième face 306 en contact avec le fluide contenu dans l'enceinte 301.

Chaque paroi de support 311 est ici un tube 311a, notamment en acier. Elle peut présenter un revêtement de protection 311b, par exemple réfractaire, en matériau composite (représenté figure 11) du côté de la deuxième face 306. Ce revêtement réfractaire est du même type que celui précédemment décrit.

Sur chaque orifice 313 d'une paroi support 311 est monté un élément d'injection de gaz 10, ici une buse d'injection d'air du type de celle décrite en référence aux figures 2-5.

L'élément d'injection de gaz a été décrit en référence à un système de distribution d'air dans un régénérateur d'unité FCC. L'invention n'est pas limitée à ce mode de réalisation, le système de distribution de gaz pourrait également être un système de distribution de vapeur au niveau d'une zone de strippage d'un réacteur d'une unité FCC, ou tout autre élément d'injection de gaz ou vapeur d'une unité FCC.

## Revendications

1. Elément d'injection de gaz (10) pour un système de distribution de gaz (1) à l'intérieur d'une enceinte d'une unité de craquage catalytique fluide, ledit élément d'injection comprenant un passage (14) le traversant de part en part s'étendant suivant une direction longitudinale (X),
**caractérisé en ce qu'**il comprend :
- un élément interne (20) métallique dont une surface interne (22) définit une partie du passage traversant (14) suivant la direction longitudinale (X),
- un fourreau creux (30) métallique, recevant une extrémité (20a) de l'élément interne (20) et fixé à celui-ci,
- un support creux (40) métallique présentant une surface interne (42) définissant le reste du passage traversant suivant la direction longitudinale (X), ledit fourreau étant en outre fixé à une extrémité du support (40).

2. Elément d'injection de gaz (10) selon la revendication 1, **caractérisé en ce que** le fourreau est en appui contre l'extrémité du support (40) à laquelle il est fixé suivant ladite direction longitudinale (X).

3. Elément d'injection de gaz (10) selon la revendication 2, **caractérisé en ce qu'**un jeu prédéterminé est ménagé entre une extrémité de l'élément interne proximale du support (40) et ce dernier suivant ladite direction longitudinale (X).

4. Elément d'injection de gaz (10) selon l'une quelconque des revendications 1 à 3, **caractérisé en ce qu'**il comprend au moins une des caractéristiques suivantes :
- le fourreau (30) est fretté sur l'élément interne (20),
- le fourreau (30) est soudé à l'élément interne (20),
- le fourreau (30) est soudé au support (40).

5. Elément d'injection de gaz (10) selon l'une quelconque des revendications 1 à 4, **caractérisé en ce que** le matériau métallique constituant l'élément interne (20) est différent du matériau métallique constituant le fourreau (30) et/ ou du matériau métallique constituant le support (40).

6. Elément d'injection de gaz (10) selon l'une quelconque des revendications 1 à 5, **caractérisé en ce qu'**une extrémité (40b) du support (40) opposée à l'élément interne (20) présente une ouverture (49) dont la section transversale a une surface inférieure ou égale à la surface de la section transversale de la partie du passage (14) définie par le support (40).

7. Elément d'injection de gaz (10) selon l'une quelconque des revendications 1 à 6, **caractérisé en ce que** l'extrémité (40a) du support (40) fixée au fourreau (30) forme une collerette faisant saillie du support (40) suivant une direction transversale à la direction longitudinale (X).

8. Elément d'injection de gaz (10) selon la revendication 7, **caractérisé en ce que** la collerette comprend au moins une des caractéristiques suivantes :
- la collerette (40a) définit un logement (48) recevant le fourreau (30) sur une partie de sa longueur suivant la direction longitudinale (X),
- la dimension de la collerette (40a) suivant la direction longitudinale (X) est prédéterminée.

9. Elément d'injection de gaz (10) selon l'une quelconque des revendications 1 à 8, **caractérisé en ce que** le passage traversant (14) comprend une partie divergente (15) s'évasant en direction de l'extrémité (20b) de l'élément interne (20) distante du support (40) suivant la direction longitudinale (X).

10. Elément d'injection de gaz (10) selon l'une quelconque des revendications 1 à 9, **caractérisé en ce qu'**un bord (26) de l'élément interne (20) opposé au support (40) présente une section transversale dont le contour comprend au moins trois segments (SI-S 10) choisis parmi un segment rectiligne (S1-S3, S9, S10) et un segment courbe (S4-S8).

11. Elément d'injection de gaz (10) selon l'une quelconque des revendications 1 à 10, **caractérisé en ce que** le fourreau (30) est un corps de révolution, notamment un cylindre, présentant un axe de révolution confondu ou parallèle à un axe longitudinal (X) du passage traversant (14), une partie au moins d'une surface externe (24) de l'élément interne (20) fixée au fourreau étant de forme complémentaire au fourreau.

12. Système de distribution de gaz (1, 201, 301) à l'intérieur d'une enceinte (100, 200, 300) d'une unité de craquage catalytique fluide, ledit système de distribution comprenant au moins une paroi support (11, 211, 311) percée d'au moins un orifice (13, 213, 313) et définissant au moins une partie d'une cavité (103, 203, 303), la paroi support (11, 211, 311) ayant une première face (105, 205, 305) destinée à être en contact avec un gaz contenu dans cette cavité, et une deuxième face (106, 206, 306), opposée à la première face,
**caractérisé en ce qu'**il comprend au moins un élément d'injection (10) selon l'une quelconque des revendications 1 à 11, le support de l'élément d'injection (10) étant solidarisé à la paroi support (11, 211, 311), au niveau de l'orifice (13, 213, 313), de sorte que du gaz issu de la cavité (103) puisse circuler au travers de la paroi support (11, 211, 311) vers la deuxième face (106, 206, 306) de celle-ci via le passage (14) de l'élément interne (20) et du support (40).

13. Système de distribution de gaz (1, 201, 301) selon la revendication 12, **caractérisé en ce que** le support (40) est inséré dans l'orifice et solidarisé à la paroi support (11, 211, 311), l'élément interne (20) faisant saillie de la deuxième face (106, 206, 306) de ladite paroi support (11, 211, 311).

14. Système de distribution de gaz (1, 201, 301) selon la revendication 12 ou 13, **caractérisé en ce que** le support présentant une collerette (40a), celle-ci est située du côté de la deuxième face (106, 206, 306) de ladite paroi support (11, 211, 311).

## Patentansprüche

1. Gasinjektionselement (10) für ein Gasverteilungssystem (1) innerhalb eines Gehäuses einer Fluid-Catalytic-Cracking-Einheit, wobei das Injektionselement einen Durchgang (14) umfasst, der durch dieses hindurchgeht und sich in Längsrichtung (X) erstreckt,
**dadurch gekennzeichnet, dass** es umfasst:
- ein metallisches Innenelement (20), dessen eine Innenfläche (22) einen Teil des hindurchgehenden Durchgangs (14) in der Längsrichtung (X) definiert,
- eine hohle metallische Hülse (30), die ein Ende (20a) des Innenelements (20) aufnimmt und daran befestigt ist,
- einen hohlen Metallträger (40) mit einer Innenfläche (42), die den Rest des hindurchgehenden Durchgangs in der Längsrichtung (X) definiert, wobei die Hülse außerdem an einem Ende des Trägers (40) befestigt ist.

2. Gasinjektionselement (10) nach Anspruch 1, **dadurch gekennzeichnet, dass** die Hülse gegen das Ende des Trägers (40) anliegt, an dem sie in der Längsrichtung (X) befestigt ist.

3. Gasinjektionselement (10) nach Anspruch 2, **dadurch gekennzeichnet, dass** zwischen einem Ende des proximalen Innenelements des Trägers (40) und dem letzteren in der Längsrichtung (X) ein vorbestimmtes Spiel vorgesehen ist.

4. Gasinjektionselement (10) nach einem der Ansprüche 1 bis 3, **dadurch gekennzeichnet, dass** es mindestens eine der folgenden Eigenschaften umfasst:
- die Hülse (30) ist auf das Innenelement (20) aufgeschrumpft,
- die Hülse (30) ist an das Innenelement (20) geschweißt,
- die Hülse (30) ist an den Träger (40) geschweißt.

5. Gasinjektionselement (10) nach einem der Ansprüche 1 bis 4, **dadurch gekennzeichnet, dass** sich das metallische Material, aus dem das Innenelement (20) besteht, von dem metallischen Material, aus dem die Hülse (30) besteht, und/oder von dem metallischen Material unterscheidet, aus dem der Träger (40) besteht.

6. Gasinjektionselement (10) nach einem der Ansprüche 1 bis 5, **dadurch gekennzeichnet, dass** ein Ende (40b) des Trägers (40) dem Innenelement (20) gegenüberliegend eine Öffnung (49) aufweist, deren Querschnitt eine Fläche aufweist, die kleiner als die oder gleich der Querschnittsfläche des durch den Träger (40) definierten Teils des Durchgangs (14) ist.

7. Gasinjektionselement (10) nach einem der Ansprüche 1 bis 6, **dadurch gekennzeichnet, dass** das an der Hülse (30) befestigte Ende (40a) des Trägers (40) einen vom Träger (40) vorstehenden Kragen in einer Richtung quer zur Längsrichtung (X) bildet.

8. Gasinjektionselement (10) nach Anspruch 7, **dadurch gekennzeichnet, dass** der Kragen mindestens eine der folgenden Eigenschaften umfasst:
- der Kragen (40a) definiert eine Aufnahme (48), die die Hülse (30) über einen Teil ihrer Länge in der Längsrichtung (X) aufnimmt,
- die Abmessung des Kragens (40a) in der Längsrichtung (X) ist vorbestimmt.

9. Gasinjektionselement (10) nach einem der Ansprüche 1 bis 8, **dadurch gekennzeichnet, dass** der hindurchgehende Durchgang (14) einen divergenten Teil (15) umfasst, der sich in Richtung des Endes (20b) des Innenelements (20) in der Längsrichtung (X) vom Träger (40) aufweitet.

10. Gasinjektionselement (10) nach einem der Ansprüche 1 bis 9, **dadurch gekennzeichnet, dass** eine dem Träger (40) gegenüberliegende Kante (26) des Innenelements (20) einen Querschnitt aufweist, dessen Kontur mindestens drei Segmente (S1-S10) umfasst, die aus einem geradlinigen Segment (S1-S3, S9, S10) und einem gekrümmten Segment (S4-S8) ausgewählt sind.

11. Gasinjektionselement (10) nach einem der Ansprüche 1 bis 10, **dadurch gekennzeichnet, dass** die Hülse (30) ein Rotationskörper ist, insbesondere ein Zylinder, der eine Rotationsachse aufweist, die mit einer Längsachse (X) des hindurchgehenden Durchgangs (14) zusammenfällt oder parallel dazu ist, wobei mindestens ein Teil einer Außenfläche (24) des an der Hülse befestigten Innenelements (20) eine komplementäre Form zur Hülse aufweist.

12. Gasverteilungssystem (1, 201, 301) in einem Gehäuse (100, 200, 300) einer Fluid-Catalytic-Cracking-Einheit, wobei das Verteilungssystem mindestens eine Tragwand (11, 211, 311) umfasst, die mit mindestens einer Öffnung (13, 213, 313) durchbohrt ist, und mindestens einen Teil eines Hohlraums (103, 203, 303) definiert, wobei die Tragwand (11, 211, 311) eine erste Fläche (105, 205, 305), die dazu bestimmt ist, mit einem in diesem Hohlraum enthaltenen Gas in Kontakt zu stehen, und eine zweite Fläche (106, 206, 306) gegenüber der ersten Fläche aufweist,
**dadurch gekennzeichnet, dass** es mindestens ein Injektionselement (10) nach einem der Ansprüche 1 bis 11 umfasst, wobei der Träger des Injektionselements (10) an der Tragwand (11, 211, 311) auf der Höhe der Öffnung (13, 213, 313) befestigt ist, sodass das Gas aus dem Hohlraum (103) durch die Tragwand (11, 211, 311) zur zweiten Fläche (106, 206, 306) derselben über den Durchgang (14) des Innenelements (20) und des Trägers (40) strömen kann.

13. Gasverteilungssystem (1, 201, 301) nach Anspruch 12, **dadurch gekennzeichnet, dass** der Träger (40) in die Öffnung eingeführt und an der Tragwand (11, 211, 311) befestigt ist, wobei das Innenelement (20) von der zweiten Fläche (106, 206, 306) der Tragwand (11, 211, 311) vorsteht.

14. Gasverteilungssystem (1, 201, 301) nach Anspruch 12 oder 13, **dadurch gekennzeichnet, dass** der Träger einen Kragen (40a) aufweist, wobei sich dieser auf der Seite der zweiten Fläche (106, 206, 306) der Tragwand (11, 211, 311) befindet.

## Claims

1. A gas injection element (10) for a system (1) for distributing a gas inside a chamber of a fluid catalytic cracking unit, said injection element comprising a through-passage (14) passing all the way through it in a longitudinal direction (X),
**characterised in that** it comprises:
- a metallic internal element (20) of which an internal surface (22) defines a part of the through-passage (14) passing through in the longitudinal direction (X),
- a hollow metallic sleeve (30), receiving one end (20a) of the internal element (20) and attached thereto,
- a hollow metal support (40) having an internal surface (42) defining the remainder of the through-passage passing through in the longitudinal direction (X), said sleeve being further attached to one end of the support (40).

2. The gas injection element (10) according to Claim 1, **characterised in that** the sleeve bears against the end of the support (40) to which it is attached in said longitudinal direction (X).

3. The gas injection element (10) according to Claim 2, **characterised in that** a predetermined clearance is provided between a proximal end of the internal element of the support (40) and the latter following said longitudinal direction (X).

4. The gas injection element (10) according to any one of Claims 1 to 3, **characterised in that** it comprises at least one of the following characteristics:
- the sleeve (30) is shrunk onto the internal element (20),
- the sleeve (30) is welded to the internal element (20),
- the sleeve (30) is welded to the support (40).

5. The gas injection element (10) according to any one of Claims 1 to 4, **characterised in that** the metallic material constituting the internal element (20) is different from the metallic material constituting the sleeve (30) and/or the metallic material constituting the support (40).

6. The gas injection element (10) according to any one of Claims 1 to 5, **characterised in that** an end (40b) of the support (40) opposite the internal element (20) has an opening (49), the cross-section of which has an area less than or equal to the area of the cross-section of the part of the passage (14) defined by the support (40).

7. The gas injection element (10) according to any one of Claims 1 to 6, **characterised in that** the end (40a) of the support (40) attached to the sleeve (30) forms a collar projecting from the support (40) in a direction transverse to the longitudinal direction (X).

8. The gas injection element (10) according to Claim 7, **characterised in that** the collar comprises at least one of the following characteristics:
- the collar (40a) defines a housing (48) receiving the sleeve (30) over a part of its length in the longitudinal direction (X),
- the dimension of the collar (40a) in the longitudinal direction (X) is predetermined.

9. The gas injection element (10) according to any one of Claims 1 to 8, **characterised in that** the through-passage (14) comprises a diverging part (15) which widens towards the end (20b) of the internal element (20) remote from the support (40) in the longitudinal direction (X).

10. The gas injection element (10) according to any one of Claims 1 to 9, **characterised in that** an edge (26) of the internal element (20) opposite the support (40) has a cross-section, the contour of which comprises at least three segments (S1-S10) chosen from a rectilinear segment (S1-S3, S9, S10) and a curved segment (S4-S8).

11. The gas injection element (10) according to any one of Claims 1 to 10, **characterised in that** the sleeve (30) is a body of revolution, in particular a cylinder, having an axis of revolution coincident with or parallel to a longitudinal axis (X) of the through-passage (14), at least part of an external surface (24) of the internal element (20) attached to the sleeve being of complementary shape to the sleeve.

12. A gas distribution system (1, 201, 301) inside a chamber (100, 200, 300) of a fluid catalytic cracking unit, said distribution system comprising at least one support wall (11, 211, 311) pierced by at least one orifice (13, 213, 313) and defining at least part of a cavity (103, 203, 303), the support wall (11, 211, 311) having a first face (105, 205, 305) intended to be in contact with a gas contained in this cavity, and a second face (106, 206, 306), opposite the first face,
**characterised in that** it comprises at least one injection element (10) according to any one of Claims 1 to 11, the support of the injection element (10) being secured to the support wall (11, 211, 311), at the orifice (13, 213, 313), so that the gas from the cavity (103) can flow through the support wall (11, 211, 311) towards the second face (106, 206, 306) thereof via the passage (14) of the internal element (20) and of the support (40).

13. The gas distribution system (1, 201, 301) according to Claim 12, **characterised in that** the support (40) is inserted into the orifice and secured to the support wall (11, 211, 311), the internal element (20) projecting from the second face (106, 206, 306) of said support wall (11, 211, 311).

14. The gas distribution system (1, 201, 301) according to Claim 12 or 13, **characterised in that** the support, having a collar (40a), is located on the side of the second face (106, 206, 306) of said support wall (11, 211, 311).
